# EUROPÄISCHE PATENTSCHRIFT

(11) **EP 1 352 158 B1**
(45) Veröffentlichungstag und Bekanntmachung des Hinweises auf die Patenterteilung: **02.08.2006**
(21) Anmeldenummer: 01271490.3
(22) Anmeldetag: 04.12.2001
(51) Int. Cl.: F01L 9/04, F02B 75/02, F02D 13/02, F02D 33/02

(54) **VERFAHREN UND VORRICHTUNG ZUM BETREIBEN EINER BRENNKRAFTMASCHINE**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 21.12.2000 DE 10063750
(43) Veröffentlichungstag der Anmeldung: 15.10.2003
(73) Patentinhaber: ROBERT BOSCH GMBH, 70442 Stuttgart (DE)
(72) Erfinder: GAESSLER, Hermann, 71665 Vaihingen (DE); DIEHL, Udo, 70195 Stuttgart (DE); MISCHKER, Karsten, 71229 Leonberg (DE); WALTER, Rainer, 74385 Pleidelsheim (DE); BLUMENSTOCK, Andreas, 71638 Ludwigsburg (DE); ROSENAU, Bernd, 71732 Tamm (DE); SCHIEMANN, Juergen, 71706 Markgroeningen (DE); GROSSE, Christian, 70806 Kornwestheim (DE); MALLEBREIN, Georg, 70825 Korntal-Muenchingen (DE); BEUCHE, Volker, 70372 Stuttgart (DE); REIMER, Stefan, 71706 Markgroeningen (DE)
(86) Internationale Anmeldenummer: PCT/DE2001/004536
(87) Internationale Veröffentlichungsnummer: WO 2002/050406

(56) Entgegenhaltungen:
- EP-A- 0 367 448
- EP-A- 0 443 785
- US-A- 4 641 613
- US-A- 5 377 631

## Beschreibung

Die vorliegende Erfindung betrifft ein. Verfahren und eine Vorrichtung zum Betreiben einer Brennkraftmaschine mit einer Mehrzahl von Zylindern, die jeweils zumindest ein Einlass- und ein Auslassventil mit voll-variabler Ventilsteuerung aufweisen.

Moderne Brennkraftmaschinen mit voll-variablem Ventiltrieb arbeiten in der Regel mit einer elektromagnetischen Ventilsteuerung (EMVS), einer elektrohydraulischen Ventilsteuerung (EHVS) oder mechanischen Lösungen, wie beispielsweise einer variablen Nockenwellen Steuerung (VANOS) zur Phasensteuerung in Verbindung mit einem variablen Ventilantrieb (VVT) zur Hubsteuerung. Bei der elektromechanischen und der elektrohydraulischen Ventilsteuerung weist die Brennkraftmaschine keine Nockenwelle auf, wohingegen sie bei den mechanischen Lösungen in der Regel noch vorhanden ist.

Aufgrund des Nichtvorhandenseins einer Nockenwelle bietet die elektromagnetische und elektrohydraulische Ventilsteuerung grössere Freiheitsgrade, ein Öffnen, ein Schliessen und einen Hub der Ein- und Auslassventile einer Brennkraftmaschine, beispielsweise eines Otto- oder Dieselmotors, zu steuern. Mit der elektromagnetischen Ventilsteuerung ist es möglich einen Öffnungs- und einen Schliesswinkel eines Ventils zu steuern und mit der elektrohydraulischen Ventilsteuerung ist es möglich, einen Öffnungs- und einen Schliesswinkel, eine Öffnungs- und Schliessgeschwindigkeit als auch den Hub des entsprechenden Ventils zu steuern.

Die Möglichkeit die Einlass- und Auslassventile von jedem Zylinder der Brennkraftmaschine einzeln zu steuern ermöglicht einen verbesserten Betrieb der Brennkraftmaschine.

Die US 5,377,631 offenbart eine Brennkraftmaschine, die des statt bisher üblichen 4-Taktbetriebs, in einem 6-, 8- oder 12-Taktbetrieb betrieben wird. Hierbei wird indirekt proportional zu der Last der Brennkraftmaschine ein oder mehrere Zylinder während des Betriebs der Brennkraftmaschine deaktiviert. Bei den deaktivierten Zylindern ist eine Kraftstoffeinspritzung unterdrückt und die Einlass- und Auslassventile sind bei der Abwärtsbewegung und der Aufwärtsbewegung des Kolbens in dem Zylinder geschlossen. Damit erzeugt die Abwärtsbewegung des Kolbens bei einem deaktivierten Zylinder lediglich ein Vakuum und die Aufwärtsbewegung des Kolbens bringt den Zylinderinnendruck zurück zu im wesentlichen dem Atmosphärendruck. Dies ermöglicht einen ungedrosselten Betrieb der Brennkraftmaschine mit weniger Reibung in den deaktivierten Zylindern, so dass eine Brennkraftmaschine mit geringerem Kraftstoffverbrauch zur Verfügung gestellt wird.

Um bei einem Ottomotor eine Kohlenwasserstoffemission (HC-Emission) direkt nach dem Start des Motors zu senken, ist es heute üblich, direkt hinter die Auslassventile des Motors mittels einer elektrischen Pumpe Frischluft einzublasen. Diese Pumpe wird als Sekundärluftpumpe bezeichnet und weist üblicherweise Sekundärtuftventile, eine Sekundärluftverschlauchung und eine elektrische Ansteuerung auf. Die Frischluft lässt die Kohlenwasserstoffe (HC) in dem noch heissen Abgas oxidieren. Dies wird als Nachoxidation bezeichnet.

Bei der zuvor beschriebenen Nachoxidation kann der Ottomotor auch bei einem λ<1 betrieben werden. Diese Nachoxidation eines Kraftstoff-Luft-Gemisches erzeugt eine Exotherme und ermögücht damit desweiteren eine schnelle Aufheizung eines in einem Auspuffsystem des Ottomotors angeordneten Katalysators.

Die US 4,075,837 offenbart eine Brennkraftmaschine, in der, um hinter die Auslassventile Sekundärluft zuzuführen, ein zweiter von einem Hauptansaugkanal getrennter Ansaugkanal vorgesehen ist, der mit einem einzelnen Zylinder verbunden ist. Ein Auspuffkanal dieses einzelnen Zylinders weist Verbindungen mit einem Hauptauspuffkanal der verbleibenden Zylinder auf, die direkt hinter den Auslassventilen der verbleibenden Zylinder in die jeweiligen Auslasskanäle münden. Damit wird bei Betriebszuständen, in denen es erforderlich ist, das Abgas mittels Zuführen von Sekundärluft weiter zu reinigen, durch Unterdrücken einer Kraftstoffzufuhr und eines Zündvorgangs in diesem einen Zylinder, der den getrennten Ansaugkanal aufweist, Sekundärluft zugeführt. Damit wirkt der Kolben bei diesem Zylinder, bei dem die Kraftstoffzufuhr und die Zündung unterdrückt ist, wie eine Pumpe, die bei einer Abwärtsbewegung des Kolbens Luft durch das Einlassventil ansaugt und bei der Aufwärtsbewegung des Kolbens, wenn das Einlassventil geschlossen ist, die Frischluft in dem Zylinder als Sekundärluft durch den Auslasskanal dieses Zylinders zu den verbleibenden Zylindern pumpt.

Nach der US 4,075,837 ist es allerdings erforderlich, sowohl einen weiteren Ansaugkanal, der von dem Hauptansaugkanal getrennt ist, als auch einen weiteren Auslasskanal für den Zylinder, der als Luftpumpe verwendet wird, vorzusehen. Dies erhöht die Kosten und die Wartungsanfälligkeit der Brennkraftmaschine.

Es ist die Aufgabe der vorliegenden Erfindung, ein einfaches Verfahren und eine einfache Vorrichtung zur Abgasemissionsverringerung bei einer Brennkraftmaschine anzugeben.

Diese Aufgabe wird erfindungsgemäss durch die im Patentanspruch 1 bzw. im Patentanspruch 7 aufgeführten Merkmale gelöst.

Vorteilhafte Ausführungsbeispiele der vorliegenden Erfindung ergeben sich aus den Unteransprüchen.

Das Verfahren der vorliegenden Erfindung ist zum Betreiben einer Brennkraftmaschine mit einer Mehrzahl von Zylindern, die jeweils zumindest ein Einlass- und ein Auslassventil mit voll-variabler Ventilsteuerung aufweisen. In dieser Brennkraftmaschine wird an zumindest einem ersten Zylinder die Kraftstoffzufuhr deaktiviert, d.h. unterdrückt. Durch Öffnen des zumindest einen Einlassventils bei einer Abwärtsbewegung des Kolbens des zumindest einen ersten Zylinders, bei dem die Kraftstoffzufuhr deaktiviert ist, wird eine erste Frischluftmenge in diesen zumindest einen ersten Zylinder gesaugt. Durch Öffnen des zumindest einen Auslassventils dieses zumindest einen ersten Zylinders bei der folgenden Aufwärtsbewegung des Kolbens wird die sich im Zylinder befindende Frischluft in einen Abgaskanal der Brennkraftmaschine ausgestossen.

Vorteilhaft ermöglicht die vorliegende Erfindung eine Einsparung einer elektrischen Sekundärluftpumpe, von Sekundärluftventilen sowie einer dazugehörigen Verschlauchung und elektrischen Ansteuerung. Femer ermöglicht die vorliegende Erfindung eine einfache Abgasemissionsverringerung durch Sekundärluftzufuhr, ohne dass es erforderlich ist, einen weiteren Ansaug- oder Abgaskanal vorzusehen.

Die Erfindung kann vorteilhaft derart ausgestaltet werden, dass die Einlass- und Auslassventile der Mehrzahl von Zylindern derart angesteuert werden, dass die Brennkraftmaschine in einem 6- oder Mehrtaktverfahren betrieben wird.

Vorteilhaft ermöglicht diese Ausgestaltung der vorliegenden Erfindung einen verbrauchsoptimierten Betrieb der Brennkraftmaschine.

Die vorliegende Erfindung kann weiter vorteilhaft dergestalt ausgestaltet werde, dass bei zumindest einer zweiten Abwärtsbewegung und einer zweiten Aufwärtsbewegung unmittelbar nach einem Ausstosstakt des zumindest eines ersten Zylinders der Mehrzahl von Zylindern, das zumindest eine Einlassventil und das zumindest eine Auslassventil des zumindest eines ersten Zylinders geschlossen sind.

Vorteilhaft ermöglicht diese weitere Ausgestaltung der Erfindung eine weitere Kraftstoffverbrauchsverringerung dadurch, dass bei der Abwärtsbewegung des Kolbens in dem Zylinder erzeugte Vakuum einen ungedrosselten Betrieb dieses Zylinders mit verringerter Reibung ermöglicht. Damit kann die Brennkraftmaschine flexibel auf Lastwechsel und beispielsweise Kattstartsituationen angepasst werden und dabei sowohl die HC-Emission als auch der Kraftstoffverbrauch verbessert werden.

Die vorliegende Erfindung kann weiter vorteilhaft derart ausgestaltet werden, dass durch Steuerung von zumindest einem einer Mehrzahl von Ventilöffnungsparametern des zumindest einen Auslassventils des zumindest eines ersten Zylinders der Mehrzahl von Zylindern bei der ersten Abwärtsbewegung des Kolbens die erste Frischluftmenge gesteuert wird, und durch Steuerung von zumindest einem einer Mehrzahl von Ventilöffnungsparametern des zumindest einen Auslassventils des zumindest einen ersten Zylinders bei der ersten Abwärtsbewegung des Kolbens gesteuert wird, wie viel der ersten angesteuerten Frischluftmenge als zweite Frischfuftmenge ausgestossen wird.

Diese Ausgestaltung ermöglicht vorteilhaft eine sehr schnelle Anpassung der Sekundärluftmenge, d.h. der zweiten Frischluftmenge, die aus dem zumindest einen Auslassventil ausgestossen wird. Ferner ermöglicht diese vorteilhafte Ausgestaltung ein Ansaugen einer geringen Frischluftmenge, so dass ein geringes Vakuum in dem Zylinder zur Verringerung der Reibung erzeugt wird, und ein Ausstoßen dieser Frischluft durch das zumindest eine Auslassventil. Damit kann durch Kombination des Erzeugens eines Vakuums in Verbindung mit der Sekundärluftzufuhr ein kraftstoffsparender HCemissionsreduzierter Betrieb ermöglicht werden.

Die vorliegende Erfindung kann weiter vorteilhaft derart ausgestaltet werden, dass die zweite Frischluftmenge durch die Steuerung von zumindest einem der Mehrzahl von Ventilöffnungsparametern des zumindest einen Einlassventils und des zumindest einen Auslassventils auf der Grundlage eines Ausgangssignals einer Lambdasonde geregelt wird.

Diese vorteilhafte Ausgestaltung ermöglicht in vorteilhafter Art und Weise eine closedloop-Regelung der Sekundärluft.

lm folgenden werden Ausführungsbeispiele der vorliegenden Erfindung unter Bezugnahme auf die begleitenden Figuren beschrieben.
- Figur 1: zeigt einen Prinzipaufbau eines Zylinders einer Brennkraftmaschine mit voll-variabler Ventilsteuerung;
- Figur 2: zeigt einen Ventilsteller der voll-variablen Ventilsteuerung der Brennkraftmaschine von Figur 1;
- Figur 3: zeigt ein Ausführungsbeispiel der erfindungsgemässen Vorrichtung zur Durchführung eines Ausführungsbeispiels des Verfahrens der vorliegenden Erfindung;
- Figur 4 und 5: zeigen ein Ausführungsbeispiel des erfindungsgemässen Betriebs der Brennkraftmaschine von Figur 1.

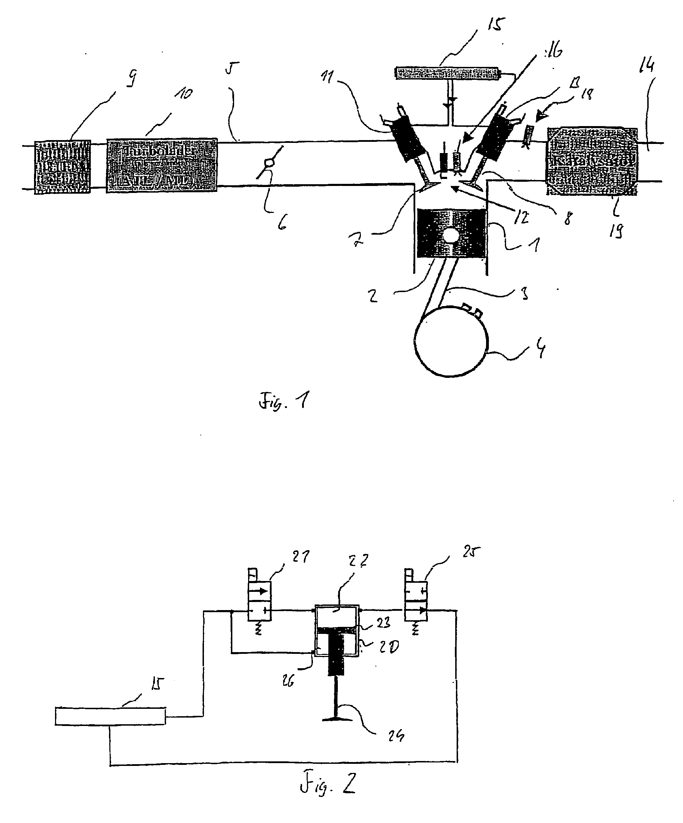

Im folgenden wird mit Verweis auf die Figuren 1 - 5 ein Ausführungsbeispiel der vorliegenden Erfindung anhand des Beispiels eines Verzylinder-Ottomotors mit voll-variablem Ventiltrieb beschrieben. Die vorliegende Erfindung ist jedoch nicht auf dieses Beispiel beschränkt, sondem ist in gleicher Art und Weise auf jede Brennkraftmaschine mit einer Mehrzahl von Zylindern mit voll-variablem Ventiltrieb unabhängig des verwendeten Kraftstoffs anwendbar.

Figur 1 zeigt einen Prinzipaufbau eines Zylinders eines Ottomotors mit voll-variabler Ventilsteuerung.

Die Bezugsziffer 1 bezeichnet einen Zylinder, in dem ein Kolben 2, der mit einer Aufwärtsbewegung nach oben versetzbar ist und mit einer Abwärtsbewegung nach unten versetzbar ist. Der Kolben 2 ist über eine Pleulstange 3 mit einer Kurbelwelle 4 verbunden, die die Aufwärts- und Abwärtsbewegung des Kolbens 2 in eine Drehbewegung wandelt.

Die Bezugsziffer 5 in Figur 1 bezeichnet einen Einlasskanal. In dem Einlasskanal 5 ist eine Drosselklappe 6 angeordnet. Durch geeignete Ansteuerung eines Einlassventils 7 und eines Auslassventils 8 kann auch ein Ottomotor ohne Drosselklappe 6 realisiert werden.

In dem Einlasskanal 5 ist ferner ein Heiss-Film-Luftmassensensor 9 zur Messung einer durch den Einlasskanal 5 strömenden Luftrnasse angeordnet, sowie ein Turbolader 10, der jedoch optional ist.

Das Einlassventil 7 wird mittels eines Ventilstellers 11 dergestalt betätigt, dass das Einlassventil 7 in einer geöffneten Position einen Brennraum 12 des Zylinders mit dem Einlasskanal 5 verbindet, und in einer geschlossenen Position den Einlasskanal 5 von dem Brennraum 12 trennt. Ein Ventilhub des Einlassventils 7 kann mittels des Ventilstellers 11 variiert werden.

Das Auslassventil 8 wird mittels eines Auslassventilstellers 13 dergestalt betätigt, dass es in einer geöffneten Position den Brennraum 12 des Zylinders 1 mit einem Abgaskanal 14 verbindet, und in einer geschlossenen Position den Brennraum 12 und den Abgaskanal 14 voneinander trennt. Ein Ventilhub des Auslassventils 8 kann mittels des Auslassventilstellers 13 variiert werden.

Der Einlassventilsteller 11 und der Auslassventilsteller 13 sind mit einer Druckversorgungseinrichtung 15, wie beispielsweise einem. Common-Rail, verbunden.

In dem Brennraum 12 des Zylinders 1 ist ferner ein Einspritzventil 16 zum Einspritzen eines zu verbrennenden Kraftstoffs in dem Brennraum 12 vorgesehen. Neben dem Einspritzventil 16 ist eine Zündkerze 17 angeordnet, zur Zündung des Kraftstoff-Luft-Gemisches.

In dem Abgaskanal 14 ist eine Lambdasonde 18 vorgesehen. Femer ist in dem Abgaskanal 14 ein Katalysator 19 angeordnet, der in einer Strömungsrichtung des Abgases nach der Lambdasonde 18 angeordnet ist.

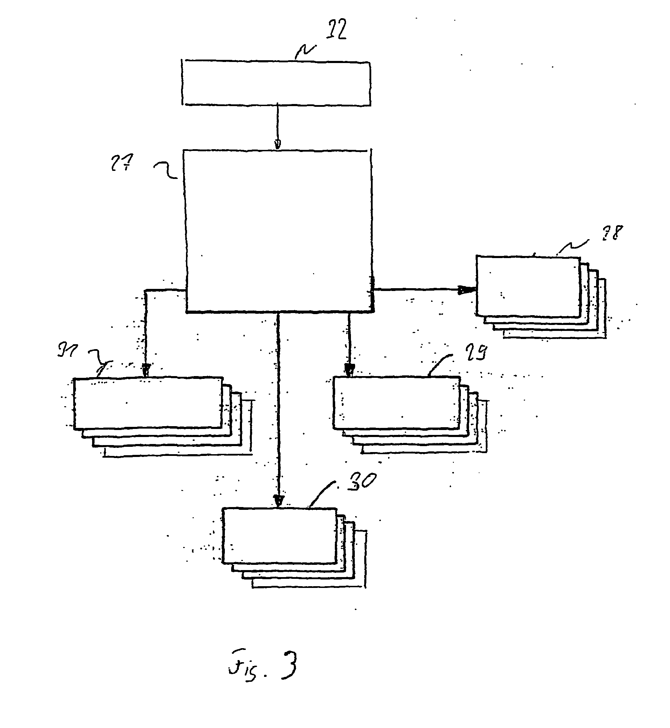

Im folgenden wird mit Verweis auf Figur 2 die Funktionsweise des Einlassventilstellers 11 und des Ausiassventilsteliers 13 beschrieben.

Die Bezugsziffer 20 in Figur 2 bezeichnet einen Ventilsteller. Der Ventilsteller 20 weist den gleichen Aufbau wie der in Figur 1 gezeigte Einlassventilsteller 11 oder der in Figur 1 gezeigte Auslassventilsteller 13 auf.

Die Bezugsziffer 21 bezeichnet ein erstes Magnetventil, das mit der Druckversorgungseinrichtung 15 verbunden ist. Die Druckversorgungseinrichtung 15 liefert unter Druck stehende Hydraulikflüssigkeit. Das erste Magnetventil 21 schaltet eine Verbindung zwischen der Druckversorgungseinrichtung 15 und einer ersten Kammer 22 des Ventilstellers 20. Wenn das Magnetventil 21 in einer geschlossenen Position ist, ist eine Hydraulikflüssigkeitsverbindung zwischen der Druckversorgungseinrichtung 15 und der erste Kammer 22 unterbrochen. Ist das Magnetventil 21 in einer geöffneten Position, kann unter Druck stehende Hydraulikflüssigkeit von der Druckversorgungseinrichtung 15 durch das Magnetventil 21 in die erste Kammer 22 des Ventilstellers 20 fliessen. Die in die erste Kammer 22 fliessende Hydraulikflüssigkeit füllt die erste Kammer 22 auf und versetzt einen Ventilfuss 23 eines Ventils 24 in dem Ventilsteller 20. Durch Variation des Hydraulikdrucks der Druckversorgungseinrichtung 15 wird eine Öffnungsgeschwindigkeit des Ventils 24 und eine Schliessgeschwindigkeit des Ventils 24 variiert.

Damit wird das Ventil 24 geöffnet. Wenn der gewünschte Ventilhub erreicht wird, wird das erste Magnetventil 21 geschlossen. Dann bleibt der Ventilfuss 23 und damit das Ventil 24, das mit dem Ventilfuss 23 starr verbunden ist, in der erreichten Position mit dem erreichten Ventilhub.

Um das Ventil 24 zu schliessen, wird ein zweites Magnetventil 25, das in einer offenen Position die erste Kammer 22 mit der Niederdruckseite der Druckversorgungseinrichtung 15 verbindet und in einer geschlossenen Position diese Verbindung unterbricht, geöffnet. Damit kann das sich in der ersten Kammer 22 befindliche Hydraulikflüssigkeit in die Druckversorgungseinrichtung 15 zurückfliessen.

Die Bezugsziffer 26 bezeichnet eine zweite Kammer des Ventilstellers 20. Die zweite Kammer 26 ist mit der Druckversorgungseinrichtung 15 verbunden.

Damit liegt an der zweiten Kammer 26 des Ventilstellers 20 der von der Druckversorgungseinrichtung 15 bereitgestellte Druck an. Wenn das zweite Magnetventil 25 geöffnet wird, versetzt die unter Druck von der Druckversorgungseinrichtung 15 in die zweite Kammer 26 fliessende Hydraulikflüssigkeit den Ventilfuss 23 mit dem Ventil 26, da die sich in der ersten Ventilkammer 22 befindliche Hydraulikflüssigkeit über das zweite Magnetventil 25 abfliessen kann. Damit wird das Ventil 24 geschlossen.

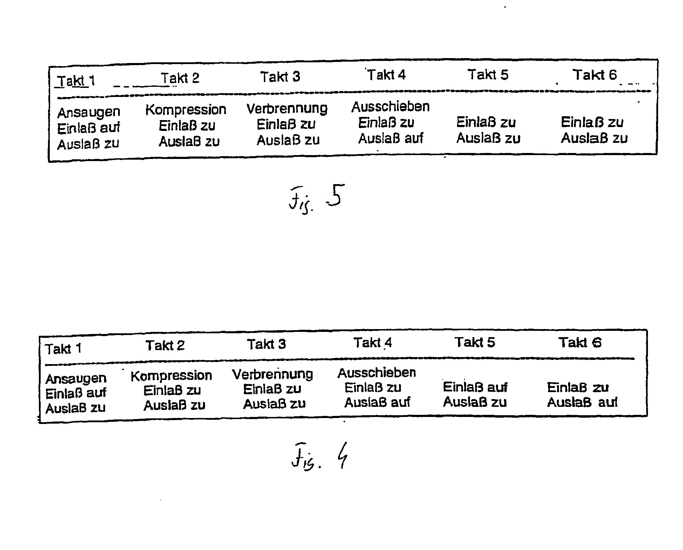

Figur 3 zeigt ein Ausführungsbeispiel der erfindungsgemässen Steuereinrichtung zur Ausführung eines Ausführungsbeispiels des erfindungsgemässen Verfahrens.

Die Bezugsziffer 27 in Figur 3 bezeichnet ein Ausführungsbeispiel der erfindungsgemässen Steuereinrichtung. Die Steuereinrichtung 27 ist mit einer Mehrzahl von Zündkerzen 28, im vorliegenden Beispiel vier Zündkerzen der vier Zylinder, verbunden. Die Steuereinrichtung 27 ist durch geeignete Ansteuerung der Zündkerzen 28 in der Lage, eine Zündung bei ausgewählten Zylindern zu unterdrücken, wohingegen sie bei den verbleibenden Zylindern stattfindet. Dies bedeutet, dass die Steuereinrichtung 27 beispielsweise in der Lage ist, eine Zündung an dem ersten Zylinder des Ottomotors zu unterdrücken, wohingegen die Zündung bei den verbleibenden drei Zylindern des Ottomotors stattfindet.

Die Steuereinrichtung 27 ist ferner mit einer Mehrzahl von Einlassventilstellem 29, im vorliegenden Beispiel vier Einlassventitstellem 29, für jeweils ein Einlassventil für jeden Zylinder verbunden. Obwohl im vorliegenden Fall nur ein Einlassventil mit einem Einlassventilsteller 29 für jeden Zylinder vorgesehen ist, ist es auch möglich, eine Mehrzahl von Einlassventilen für jeden Zylinder des Ottomotors vorzusehen.

Die Steuereinrichtung 27 ist ferner mit einer Mehrzahl von Auslassventilstellem 30, im vorliegenden Fall vier Auslassventilstellem 30, verbunden. Obwohl im vorliegenden Fall nur ein Auslassventil mit einem Auslassventilsteller 30 für jeden Zylinder vorgesehen ist, ist es auch möglich, eine Mehrzahl von Auslassventilen mit einer Mehrzahl von Auslassventilstellern 30 pro Zylinder vorzusehen. Die Einlassventilsteller 29 und Auslassventilsteller 30 entsprechen jeweils dem Ventilsteller von Figur 2.

Ausgangssignale der Steuereinrichtung 27 an die Mehrzahl von Einlassventilstellem 29 und Auslassventilstellern 30 sind Signale, die Schaltvorgänge der Magnetventile 21 und 25 in den jeweiligen Einlassventilstellem 29 und Auslassventilstellern 30 betreffen. Damit ist es mittels der Steuereinrichtung 27 möglich, durch geeignete Ansteuerung des ersten Magnetventils 21 und des zweiten Magnetventils 25 in der Mehrzahl von Einlassventilstellem 29 und der Mehrzahl von Auslassventilstellem 30, Öffnungszeitpunkte der Einlass- und/oder Auslassventile, Schliesszeitpunkte der Einlass- und/oder Auslassventile, den Öffnungshub der Einlass- und/oder Auslassventile und die Öffnungs- und/oder Schliessgeschwindigkeit der Einlass- und/oder Auslassventile zu variieren.

Die Steuereinrichtung 27 ist ferner mit einer Mehrzahl von Kraftstoffeinspritzeinrichtungen 31, im vorliegenden Fall vier Kraftstoffeinspritzdüsen, verbunden. Durch Ansteuerung der Kraftstoffeinspritzeinrichtungen 31 ist die Steuereinrichtung 27 in der Lage, eine Kraftstoffeinspritzung bei ausgewählten Zylindern zu aktivieren oder zu deaktivieren. Dies bedeutet, dass die Steuereinrichtung 27 in der Lage ist, durch geeignete Ansteuerung der Kraftstoffeinspritzeinrichtungen 31, beispielsweise die Kraftstoffeinspritzung bei einem ersten Zylinder zu deaktivieren, wohingegen die Kraftstoffeinspritzung bei den verbleibenden drei Zylindern des Ottomotors aktiviert ist, das heisst hier jeweils eine Kraftstoffeinspritzung stattfindet.

Die Steuereinrichtung 27 ist ferner mit einer Lambdasonde 32 verbunden, die in dem Abgaskanal 14 des Ottomotors angeordnet ist und ein Ausgangssignal an die Steuereinrichtung 27 ausgibt, das eine Zusammensetzung von Abgasen des Ottomotors oder eines einzelnen Zylinders des Ottomotors angibt.

Die Steuereinrichtung 27 ist vorzugsweise als Mikroprozessoreinrichtung ausgebildet. Es ist jedoch auch möglich, die Steuereinrichtung 27 mittels einer State-Machine oder mittels eines EPLDs auszugestalten.

Im folgenden wird nun ein Ausführungsbeispiel einer Funktionsweise der Steuereinrichtung 27 in Figur 3 mit Verweis auf die Figuren 5 und 6 beschrieben.

Die Zündfolge des 4-Zylinder-Ottomotors des vorliegenden Beispiels ist 1-3-S-2-4-S. "S" bedeutet, dass in diesem Zylinder keine Verbrennung stattfindet, sondem, die Kraftstoffeinspritzung und vorzugsweise auch die Zündung deaktiviert ist.

Figur 4 zeigt eine Tabelle, die den Verlauf der Takte eines Zylinders veranschaulicht. Takt 1 in Figur 4 ist der Ansaugtakt des Zylinders. Während des Ansaugtaktes wird der Kolben in dem Zylinder dergestalt versetzt, dass sich der Brennraum vergrössert. Dies wird im folgenden als Abwärtsbewegung des Kolbens bezeichnet. Die Steuereinrichtung 27 steuert dabei den Einlassventilsteller 29 des Einlassventils dergestalt an, dass das Einlassventil während der Abwärtsbewegung des Kolbens geöffnet ist. Durch die Abwärtsbewegung des Kolbens wird Frischluft aus dem Einlasskanal des Zylinders in den Brennraum des Zylinders gesaugt. Die Steuereinrichtung 27 steuert während des Ansaugtaktes die Kraftstoffeinrichtung 31 dieses Zylinders dergestalt an, dass während der Abwärtsbewegung des Kolbens Kraftstoff in den Brennraum des Zylinders eingespritzt wird. Dadurch bildet sich in dem Brennraum des Zylinders ein Kraftstoff-Frischluft-Gemisch. Während des Ansaugtaktes steuert die Steuereinrichtung 27 den Auslassvenülsteller 30 des Auslassventils dergestalt an, dass das Auslassventil geschlossen ist.

Der Takt 2 des Zylinders ist der Kompressionstakt des Zylinders. Während des Kompressionstaktes des Zylinders wird der Kolben in dem Zylinder dergestalt versetzt, dass sich das Brennraumvolumen verkleinert. Dies wird im folgenden als Aufwärtsbewegung des Zylinders bezeichnet. Die Steuereinrichtung 27 steuert den Einlassventilsteller 29 und den Auslassventilsteller 30 des Einlassventils und des Auslassventils dergestalt an, dass beide Ventile geschlossen sind. Dadurch wird bei der Aufwärtsbewegung des Kolbens das in dem Brennraum des Zylinders befindliche Kraftstoff-Frischtuft-Gemisch komprimiert

In dem Takt 3 des Zylinders wird der Kolben in dem Zylinder dergestalt versetzt, dass sich das Brennraumvolumen des Zylinders vergrössert. Dies wird im folgenden als Abwärtsbewegung des Kolbens bezeichnet. In dem Takt 3, dem Verbrennungstakt des Zylinders, steuert die Steuereinrichtung 27 die Zündkerze 28 des Zylinders dergestalt an, dass die Zündkerze 28 einen vorbestimmten Kurbelwinkelbetrag vor oder nach dem oberen Totpunkt des Zylinders einen Zündfunken abgibt und das in dem Brennraum befindliche Kraftstoff-Frischtuft-Gemisch zündet. Die Steuereinrichtung 27 steuert während des Verbrennungstaktes den Einlassventilsteller 29 und den Auslassventilsteller 30 dergestalt an, dass sowohl das Einlassventil als auch das Auslassventil geschlossen sind.

In dem Takt 4 des Zylinders wird der Kolben in dem Zylinder dergestalt versetzt, dass das Brennraumvolumen abnimmt. Dies wird im folgenden als Aufwärtsbewegung des Kolbens bezeichnet. Der Takt 4 des Zylinders wird als Ausschubtakt oder Ausstosstakt bezeichnet Dabei steuert die Steuereinrichtung 27 den Einlassventilsteller 29 des Einlassventils dergestalt an, dass das Einlassventil während des ganzen Ausschubtaktes geschlossen ist, wohingegen die Steuereinrichtung 27 den Auslassventilsteller 30 dergestalt ansteuert, dass das Auslassventil geöffnet ist, so dass bei der Aufwärtsbewegung des Zylinders ein Restgas der Verbrennung in den Abgaskanal des Zylinders ausgeschoben wird.

Gemäss der vorliegenden Erfindung folgen zwei weitere Takte, nämlich ein Takt 5 und ein Takt 6. Während des Taktes 5 wird der Kolben in dem Zylinder nach unten versetzt, das heisst das Brennraumvolumen des Zylinders nimmt von einem Ende des vierten Taktes bei dem oberen Totpunkt des Zylinders bis zu einem Ende des Taktes 5 bei einem unteren Totpunkt des Zylinders zu. Während des Taktes 6 von dem unteren Totpunkt des Zylinders bis zu dem oberen Totpunkt des Zylinders nimmt das Brennraumvolumen des Zylinders mit der Aufwärtsbewegung des Zylinders wieder ab.

lm Gegensatz zum normalen Betrieb eines 4-Takt-Ottomotors, in dem es nach dem vierten Takt wieder mit dem Takt 1, also mit dem Ansaugtakt mit einer Kraftstoffeinspritzung weitergehen würde, findet gemäss der vorliegenden Erfindung in dem Takt 5, der dem Takt 4 folgt, keine Kraftstoffeinspritzung statt. Dabei steuert die Steuereinrichtung 27 die Kraftstoffeinspritzeinrichtung 31 des Zylinders dergestalt an, dass die Kraftstoffeinspritzung während Takt 5 deaktiviert ist.

Die Steuereinrichtung 27 steuert den Einlassventilsteller 29 des Einlassventils dergestalt an, dass das Einlassventil während des Taktes 5 zumindest zeitweise geöffnet ist. Ferner steuert die Steuereinrichtung 27 den Auslassventilsteller 30 des Auslassventils dergestalt an, dass das Auslassventil in dem Takt 5 geschlossen ist.

In dem folgenden Takt 6 steuert die Steuereinrichtung 27 den Einlassventilsteller 29 des Einlassventils dergestalt an, dass das Einlassventil geschlossen ist, und steuert den Auslassventilsteller 30 des Auslassventils dergestalt an, dass das Auslassventil während der Aufinrärtsbewegung des Kolbens geöffnet ist.

Somit wird in dem Takt 5 des Ottomotors Frischluft in den Brennraum des Zylinders gesaugt, die dann während des folgenden Taktes 6 in des Abgaskanal ausgeschoben wird. Die Sekundärluft fördert dann eine Oxidation des Abgases in dem Abgaskanal.

Durch Veränderung der Ansteuerung des Einlassventilstellers 29 ist die Steuereinrichtung 27 in der Lage, die in dem Takt 5 in den Brennraum des Zylinders gesaugte Frischluftmenge zu steuern. Durch geeignete Ansteuerung des ersten Magnetventils 21 und des zweiten Magnetventils 25 in Figur 2 ist die Steuereinrichtung 27 in der Lage, einen Ventil-Öffnet Zeitpunkt des Einlassventils, einen Ventil-Schliesst Zeitpunkt und einen Ventilhub zu variieren.

Ferner steuert die Steuereinrichtung 27 durch geeignete Ansteuerung des ersten Magnetventils 21 und des zweiten Magnetventils 25 des Auslassventilstellers 30 einen Ventil-Öffnet Zeitpunkt des Auslassventils, einen Ventil-Schliesst Zeitpunkt des Auslassventils und einen Ventilhub.

Die Frischluftfüllung des Zylinders wird hauptsächlich mittels einer Steuergrösse Winkel-Einlass-Schliesst (ES) und dem Hub des Einlassventils gesteuert. Wenn der Hub des Einlassventils ausreichend gross ist, dass kein nennenswerter Differenzdruck, d.h. kein Druckunterschied zwischen dem Zylinderbrennraum und einem Einlasskanal des Zylinders besteht, ist der Winkel-Einlass-Schliesst die Steuergrösse, mit der die Frischluftfüllungssteuerung realisiert wird. Hierbei kann beispielsweise mit einem frühen Winkel-Einlass-Schliesst, d.h. einem Schliessen des Einlassventils vor einem unteren Totpunkt eines Kolbens, eine Frischluftfüllung des Zylinders begrenzt werden. Femer ist es möglich, mit einem späten Schliessen des Einlassventils, das heisst einem späten Winkel-Einlass-Schliesst, die Frischluftfüllung in den Brennraum des Zylinders zu beschränkten, da die schon in den Brennraum eingeströmte Frischluftfüllung teilweise wieder zurück in den Einlasskanal gedrängt wird.

Die zweite Hauptsteuergrösse für die Frischluftfüllung des Zylinders ist die Steuergrösse Hub, das heisst der Hub des Einlassventils.

Der Hub bestimmt einen Einlass- bzw. Auslassquerschnitt des Ventils und damit den Differenzdruck an dem Ventil. Oberhalb eines bestimmten drehzahlabhängigen Ventilhubs der von der Ausgestaltung eines Saugrohrs und des Ventils bzw. des Ventilsitzes abhängt, wird ein weitgehender Druckausgleich erzielt Dies bedeutet, dass die Druckdifferenz sehr schnell nach dem Öffnen des Ventils nahezu null wird.

Dementsprechend sind bei einem grossen Hub Öffiungs- und Schliessvorgang des jeweiligen Ventils entkoppelt Dies bedeutet, dass ein frühes bzw. ein spätes Öffnen des Auslasserventils, das heisst ein früher oder später Winkel-Auslass-Öffnet nur wenig die verbleibende Restgasmenge beeinflusst. Im Gegensatz dazu sind bei einem kleinen Hub die Öffnungs- und Schliessvorgänge stark gekoppelt. Dies bedeutet, dass eine Öffnungszeitfläche die als die Öffnungszeit in Kurbelwinkeleinheiten mal dem Öffnungshub definiert ist, für den Ladungswechsel und damit die Frischluftfüllung, entscheidend ist.

Der nötige Hub des Einlass- bzw. des Auslassventils ist von einer Drehzahl des Ottomotors abhängig. Ein hohe Drehzahl erfordert einen grossen Hub, um einen Druckausgleich zu ermöglichen. Bei einer niedrigen Drehzahl genügt ein geringerer Hub. Ein zu kleiner Hub jedoch führt zu Strömungsverlusten an einem Spalt zwischen dem Ventilsitz und dem Ventil.

Eine in Takt 5 in dem Brennraum des Zylinders befindliche Restgasmenge der Verbrennung wird durch einen Winkel-Einlass-Öffnet, d.h. dem Öffhungszepunkt des Einlassventils, zusammen mit einem Winkel-Auslass-Schliesst, d.h. dem Schliesszeitpunkt des Auslassventils, bestimmt. Die Steuergrössen Winkel-Einlass-Öffnet und Winkel-Auslass-Schliesst beeinflussen die Frischluftfüllung des Brennraums des Zylinders dergestalt, dass sie das Restgas einer vorangegangenen Verbrennung bei dem folgenden Ansaugvorgang in Takt 5 steuern. Wenn sich bei dem folgenden Ansaugvorgang viel Restgas in dem Brennraum es Zylinders befindet, kann nur wenig Frischgas zugeführt werden. Wenn sich bei dem folgenden Ansaugvorgang wenig Restgas in dem Brennraum es Zylinders befindet, kann eine grössere Menge Frischgas zugeführt werden.

Es kann die gleiche Frischluftfüllung erzielt werden, indem entweder der Einlasshub des Einlassventils verringert wird oder bei grossen Einlassventilhub die Steuergrösse Winkel-Einlass-Schliesst nach früh oder nach spät verschoben wird.

Die Steuereinrichtung 27 bestimmt die Sekundärluftmenge, die in den Abgaskanal auszuschieben ist, anhand eines Ausgangssignals der Lambdasonde 32. Vorzugsweise ist die Steuereinrichtung 27 dergestalt ausgestaltet, dass die Verbindung zur Lambdasonde 32 eine Rückkoppelung darstellt, so dass die durch geeignete Ansteuerung des Einlassventilstellers 29 und des Auslassventilstellers 30 gesteuerte zweite Frischluftmenge, die in den Auslasskanal ausgeschoben wird, mittels der Lambdasonde 32 erfasst wird, die wiederum ein Rückkoppelsignal zu der Steuereinrichtung 27 gibt, so dass ein geschlossener Regelkreis entsteht.

Die Steuereinrichtung 27 kann ferner dergestalt ausgestaltet werden, dass die HC-Konzentration als Rückkoppelungssignal verwendet wird.

Die in Takt 6 ausgeschobene zweite Luft ist dann die Sekundärluft, die zur Oxidation des Abgases beiträgt. Da, wie oben beschrieben worden ist, sowohl die in Takt 5 angesaugte erste Frischluftmenge, als auch die in dem Takt 6 ausgeschobene zweite Frischtuftmenge durch Veränderung der Ventilöffnungsparameter gesteuert werden kann, ist es möglich, die Sekundärluft präzise zu steuern bzw. sogar zu regeln. Damit kann die Nachoxidation genau gesteuert werden und damit die HC-Emission des Ottomotors genau gesteuert werden.

Überdies ist es möglich, das Auslassventil in Takt 6 früher zu schliessen und so nicht die ganze in dem Zylinder befindliche erste Frischluftfüllung als die zweite Frischluftfüllung in den Auslasskanal auszuschieben. Damit kann die Steuerung der Sekundärluft sehr schnell ausgeführt werden, da bis zum Ende des Ausschubvorgangs in Takt 6 die ausgeschobene Frischluftmenge durch Schliessen des Auslassventils zu einem früheren Zeitpunkt die ausgeschobene Frischluftmenge begrenzt werden kann.

Wenn der Ottomotor mit der Zündfolge 1-3-S-2-4-S betrieben wird, schiebt jeder Zylinder des Ottomotors abwechselnd einen Ausschub von verbranntem Abgas und einen

Ausschub von Sekundärluft in den Abgaskanal. Damit ist es möglich, Sekundärluft unmittelbar in die Nähe des Auslassventils zu bringen, so dass das zuvor ausgeschobene Abgas oxidieren kann und auch das nachfolgend ausgeschobene Abgas oxidieren kann.

Wenn die Steuereinrichtung 27 mittels Motorbetriebsgrössen (wie z.B. einer Motortemperatur, einem Abgas- oder Kat-Temperaturmodell oder einem Ausgangssignal der Lambdasonde 32) erfasst, dass keine Sekundärluft erforderlich ist, steuert die Steuereinrichtung 27 den Einlassventilsteller 29 und den Auslassventilsteller 30 des Auslassventils und des Einlassventils des Zylinders dergestalt, dass beide Ventile während des Taktes 5 und des s Taktes 6 geschlossen sind. Dieser Betrieb ist in Figur 5 gezeigt. Die Takte 1 bis 4 entsprechen den Takten 1 bis 4, die mit Verweis auf Figur 4 beschrieben worden sind.

Dieser Betrieb ermöglicht einen kraftstoffsparenden Betrieb des Ottomotors, da während der Abwärtsbewegung des Kolbens in dem Zylinder in dem Takt 5 bei geschlossenen Ventilen ein Vakuum erzeugt wird, das die Reibung der Kolben in den Zylindern verringert. Die verringerte Reibung führt zu einem verringerten Kraftstoffverbrauch des Ottomotors.

Mittels Auswahl des in Figur 4 gezeigten Betriebs des Ottomotors oder des in Figur 5 gezeigten Betriebs des Ottomotors abhängig von z.B. dem Ausgangssignal der Lambdasonde 32, steuert die Steuereinrichtung 27 den Betrieb des Ottomotors in vorteilhafter Art und Weise dergestalt, dass sowohl die HC-Emission des Ottomotors als auch der Kraftstoffverbrauch des Ottomotors minimiert werden.

Ebenfalls ist die Steuereinrichtung 27 in der Lage, einen Mischbetrieb des Betriebs von Figur 4 und des Betriebs von Figur 5 durch geeignete Ansteuerung des Einlassventilstellers 29 und des Auslassventilstellers 30 zu erzeugen. Dabei steuert die Steuereinrichtung 27 die erste Frischluftmenge, die in dem Takt 5 angesaugt wird, dergestalt, dass die erste Frischluftmenge geringer ist als eine bei aktuellem Saugrohrdruck in das maximale Brennraumvolumen des Zylinders passende Luftmenge. Das heisst, die Steuereinrichtung 27 steuert den Einlassventilsteller 29 dergestalt, dass das Einlassventil geschlossen wird, bevor der Kolben in dem unteren Totpunkt ist. Dies verringert Ladungswechselverluste. In dem folgenden Takt 6 wird dann die erste Frischluftmenge oder ein Teil der ersten Frischluftmenge in den Abgaskanal ausgeschoben.

Femer ist die Steuereinrichtung 27 in der Lage, durch geeignete Ansteuerung des Einlassventilstellers 29 und des Auslassventilstellers 30 den Ottomotor zu bremsen, indem durch Schliessen des Einlassventils und Auslassventils in dem Takt 5 zuerst die Abwärtsbewegung des Kolbens in dem Zylinder gehemmt wird und dann die Rückstellwirkung des Vakuums oder des Unterdrucks in dem Zylinder in dem Takt 6 eliminiert wird, indem in dem Takt 6 das Einlassventil und/oder das Auslassventil geöffnet werden.

Je nach der Art der Kraftstoffeinspritzeinrichtung des Ottomotors steuert die Steuereinrichtung 27 die Einspritzung für den nächsten Arbeitstakt, das heisst für einen Takt 1 der nach dem Takt 6 kommt.

Für einen Ottomotor mit einer Saugrohreinspritzung ist die Einspritzdauer beschränkt, da die Einspritzung erst in dem Takt 6 erfolgen darf, da sonst unverbrannter Kraftstoff in den Abgaskanal gelangen kann.

Bei einer Achtzylinderbrennkraftmaschine ist es möglich, zeitlich äquidistante Zündzeitpunkte zu erreichen, indem nur alle 81°KW gezündet wird. Dann stehen bei jedem Zylinder vier Takte für Sekundärluftzuführung zur Verfügung. Während diesen vier Takten ist die Kraftstoffzufuhr deaktiviert Je nach erforderlicher Sekundärluft ist es damit möglich, eine oder zwei Zylinderfüllungen Frischluft in den Abgaskanal auszuschieben.

## Patentansprüche

1. Verfahren zum Betreiben einer Brennkraftmaschine mit einer Mehrzahl von Zylindern, die jeweils zumindest ein Einlassventil (7) und zumindest ein Auslassventil (8) mit voll-variabler Ventilsteuerung aufweisen, umfassend folgende Schritte:
- Deaktivieren einer Kraftstoffzufuhr zu zumindest einem ersten Zylinder (1) der Mehrzahl von Zylindern, wobei der zumindest eine erste Zylinder (1) einen in dem zumindest einen ersten Zylinder (1) versetzbaren Kolben (2) aufweist;
- Ansaugen einer ersten Frischluftmenge in einen Brennraum des zumindest einen ersten Zylinders (1) durch Öffnen des zumindest einen Einlassventils (7) des zumindest einen ersten Zylinders (1) bei einer ersten Abwärtsbewegung des Kolbens (2) des zumindest einen ersten Zylinders (1), bei dem die Kraftstoffzufuhr deaktiviert ist;
- Ausstossen einer zweiten Frischluftmenge aus dem Brennraum des zumindest einen ersten Zylinders (1) durch Öffnen des zumindest einen Auslassventils (8) des zumindest einen ersten Zylinders (1) bei einer ersten Aufwärtsbewegung des Kolbens (2) des zumindest einen ersten Zylinders (1); und
- Ansteuern der Einlass- (7) und Auslassventile (8) der Mehrzahl von Zylindern dergestalt, dass die Brennkraftmaschine in einem Mehrtaktbetrieb mit mehr als vier Takten betrieben wird.

2. Verfahren nach Anspruch 1, **dadurch gekennzeichnet, dass** die erste Abwärtsbewegung und die erste Aufwärtsbewegung unmittelbar einem Ausstosstakt (Takt 4) des zumindest einen ersten Zylinders (1) der Mehrzahl von Zylindern folgen.

3. Verfahren nach Anspruch 2, **dadurch gekennzeichnet, dass** bei zumindest einer zweiten Abwärtsbewegung und einer zweiten Aufwärtsbewegung unmittelbar nach dem Ausstosstakt (Takt 4) des zumindest einen ersten Zylinders (1) der Mehrzahl von Zylindern das zumindest eine Einlassventil (7) und das zumindest eine Auslassventil (8) des zumindest einen ersten Zylinders (1) geschlossen sind.

4. Verfahren nach einem der vorangehenden Ansprüche, **dadurch gekennzeichnet, dass** durch Steuerung von zumindest einem einer Mehrzahl von Ventilöffnungsparametern des zumindest einen Einlassventils (7) des zumindest einen ersten Zylinders (1) bei der ersten Abwärtsbewegung des Kolbens die erste Frischluftmenge gesteuert wird, und durch Steuerung von zumindest einem einer Mehrzahl von Ventilöffnungsparametern des zumindest einen Auslassventils (8) des zumindest einen ersten Zylinders (1) bei der ersten Abwärtsbewegung des Kolbens ein Anteil der ersten angesaugten Frischluftmenge gesteuert wird, der als die zweite Frischluftmenge ausgestossen wird.

5. Verfahren nach Anspruch 4, **dadurch gekennzeichnet, dass** die Mehrzahl von Ventilöffnungsparametern des zumindest einen Einlass- (7) und Auslassventils (8) des zumindest einen ersten Zylinders (1) einen Ventil-Öffnet Zeitpunkt, einen Ventil-Schliesst Zeitpunkt, einen Ventilhub, eine Ventilöffnungsgeschwindigkeit und eine Ventilschliessgeschwindigkeit umfassen.

6. Verfahren nach Anspruch 4 oder 5, **dadurch gekennzeichnet, dass** die zweite Frischluftmenge durch Steuerung von zumindest einem der Mehrzahl von Ventilöffnungsparametern des zumindest einen Einlassventils (7) und des zumindest einen Auslassventils (8) des zumindest einen ersten Zylinders (1) auf der Grundlage eines Ausgangssignals einer Lambdasonde (18, 32) geregelt wird.

7. Steuereinrichtung, die ein Verfahren nach Anspruch 1 ausführt

## Claims

1. Method for operating an internal combustion engine having a plurality of cylinders which each have at least one inlet valve (7) and at least one outlet valve (8) with fully variable valve control, comprising the following steps:
- deactivation of a fuel supply to at least one first cylinder (1) of the plurality of cylinders, the at least one first cylinder (1) having a piston (2) displaceable in the at least one first cylinder (1);
- suction intake of a first fresh-air quantity into a combustion space of the at least one first cylinder (1) by means of the opening of the at least one inlet valve (7) of the at least one first cylinder (1) during a first downward movement of the piston (2) of the at least one first cylinder (1), the fuel supply being deactivated during the said suction intake;
- expulsion of a second fresh-air quantity out of the combustion space of the at least one first cylinder (1) by means of the opening of the at least one outlet valve (8) of the at least one first cylinder (1) during a first upward movement of the piston (2) of the at least one first cylinder (1); and
- activation of the inlet (7) and outlet (8) valves of the plurality of cylinders in such a way that the internal combustion engine is operated in a multi-stroke mode with more than four strokes.

2. Method according to Claim 1, **characterized in that** the first downward movement and the first upward movement directly follow an expulsion stroke (stroke 4) of the at least one first cylinder (1) of the plurality of cylinders.

3. Method according to Claim 2, **characterized in that**, during at least one second downward movement and one second upward movement directly after the expulsion stroke (stroke 4) of the at least one first cylinder (1) of the plurality of cylinders, the at least one inlet valve (7) and the at least one outlet valve (8) of the at least one first cylinder (1) are closed.

4. Method according to one of the preceding claims, **characterized in that**, by means of the control of at least one of a plurality of valve opening parameters of the at least one inlet valve (7) of the at least one first cylinder (1) during the first downward movement of the piston, the first fresh-air quantity is controlled, and, by means of the control of at least one of a plurality of valve opening parameters of the at least one outlet valve (8) of the at least one first cylinder (1) during the first downward movement of the piston, a fraction of the first suction-intake fresh-air quantity which is expelled as the second fresh-air quantity is controlled.

5. Method according to Claim 4, **characterized in that** the plurality of valve opening parameters of the at least one inlet (7) and outlet (8) valves of the at least one first cylinder (1) comprise a valve-opens time point, a valve-closes time point, a valve lift, a valve opening speed and a valve closing speed.

6. Method according to Claim 4 or 5, **characterized in that** the second fresh-air quantity is regulated by means of the control of at least one of the plurality of valve opening parameters of the at least one inlet valve (7) and of the at least one outlet valve (8) of the at least one first cylinder (1) on the basis of an output signal from a lambda probe (18, 32).

7. Control device which carries out a method according to Claim 1.

## Revendications

1. Procédé de gestion d'un moteur à combustion interne à plusieurs cylindres ayant chacun au moins une soupape d'admission (7) et au moins une soupape d'échappement (8) avec une commande des soupapes entièrement variable, comportant les étapes suivantes :
- désactivation d'une admission de carburant vers au moins un premier cylindre (1) de la pluralité de cylindres, le premier cylindre (1) présentant un piston (2) mobile dans celui-ci,
- aspiration d'une première quantité d'air frais dans une chambre de combustion du premier cylindre (1) par l'ouverture d'une soupape d'admission (7) du premier cylindre (1) lors d'un premier mouvement descendant du piston (2) dans celui-ci dont l'admission de carburant est désactivée,
- expulsion d'une deuxième quantité d'air frais hors de la chambre de combustion du premier cylindre (1) par l'ouverture d'une soupape d'échappement (8) du premier cylindre (1) lors d'un premier mouvement ascendant du piston (2) dans celui-ci, et
- commande des soupapes d'admission (7) et d'échappement (8) de la pluralité de cylindres pour que le moteur à combustion interne fonctionne dans un mode multitemps avec plus de quatre temps.

2. Procédé selon la revendication 1,
**caractérisé en ce que**
le premier mouvement descendant et le premier mouvement ascendant suivent directement un temps d'expulsion (temps 4) du premier cylindre (1) de la pluralité de cylindres.

3. Procédé selon la revendication 2,
**caractérisé en ce que**
lors d'au moins un deuxième mouvement descendant et d'un deuxième mouvement ascendant directement après le temps d'expulsion (temps 4) du premier cylindre (1) de la pluralité de cylindres, au moins une des soupapes d'admission (7) et au moins un des soupapes d'échappement (8) du premier cylindre (1) sont fermées.

4. Procédé selon l'une quelconque des revendications précédentes,
**caractérisé en ce que**
la commande d'au moins un de plusieurs paramètres d'ouverture de l'au moins une soupape d'admission (7) du premier cylindre (1) permet de commander la première quantité d'air frais lors d'un premier mouvement descendant du piston, et la commande d'au moins un de plusieurs paramètres d'ouverture de l'une au moins soupape d'échappement (8) du premier cylindre (1) permet de commander une partie de la première quantité d'air frais aspirée, qui est expulsée en tant que deuxième quantité d'air, lors du premier mouvement descendant du piston.

5. Procédé selon la revendication 4,
**caractérisé en ce que**
la majorité des paramètres d'ouverture de la soupape d'admission (7) et d'échappement (8) du premier cylindre (1) englobent un point d'ouverture de soupape, un point de fermeture de soupape, une course de soupape, une vitesse d'ouverture de soupape et une vitesse de fermeture de soupape.

6. Procédé selon la revendication 4 ou 5,
**caractérisé en ce que**
la deuxième quantité d'air frais est réglée en commandant au moins un de plusieurs paramètres d'ouverture d'au moins une soupape d'admission (7) et d'au moins une soupape d'échappement (8) du premier cylindre (1) sur la base d'un signal de sortie d'une sonde lambda (18, 32).

7. Dispositif de commande, réalisant le procédé selon la revendication 1.
